# EUROPÄISCHE PATENTANMELDUNG

(11) **EP 4 283 493 A1**
(43) Veröffentlichungstag der Anmeldung: **29.11.2023**
(21) Anmeldenummer: 22175313.0
(22) Anmeldetag: 25.05.2022
(51) Int. Cl.: G06F 16/84

(54) **VERFAHREN ZUR PRODUKTIONSPLANUNG**

(71) Anmelder: Siemens Aktiengesellschaft, 80333 München (DE)
(72) Erfinder: Krause, Stefan, 04177 Leipzig (DE); Myszkowski, Adam, 81739 München (DE); Nowitschkow, Alexander, 81739 München (DE); Robl, Peter, 94133 Röhrnbach (DE)
(74) Vertreter: Siemens Patent Attorneys

(57) **Zusammenfassung**

Das Verfahren sieht vor, dass in einer IOT-Plattform Daten zu Produktionsmaschinen zugeordneter Produktionsstätten gespeichert werden. Die IOT-Plattform ermittelt aus Objektdaten eines zu produzierenden Objekts abgeleitete Objektdaten, insbesondere ein geeignetes Fertigungsverfahren, und vergleicht diese mit den Maschinendaten, um passende Maschinen zu bestimmen. Unterschiedliche Datenformate werden auf das Datenformat der IOT-Plattform gemappt.

## Beschreibung

Die Erfindung betrifft ein Verfahren zur Produktionsplanung, insbesondere zur Bestimmung von Maschinen, die für die Produktion eines Objektes eingesetzt werden.

Für die Produktion eines Objekts sind ein oder mehrere Verfahrensschritte notwendig, die von unterschiedlichen Produktionsanlagen, im Folgenden allgemein als Maschinen bezeichnet, geleistet werden können. Der Begriff Objekt umfasst jegliches mechanische Bauteil beliebiger Komplexität, beispielsweise eine Welle, ein Getriebe oder ein Gehäuse. Für die konkrete Herstellung ist eine Planung notwendig, welche Maschinen am besten geeignet sind, wobei zum einen berücksichtigt werden muss, welche Maschine welche Produktionsschritte durchführen kann, zum anderen aber auch, ob weitere technische Eigenschaften der Maschinen wie beispielsweise Qualitätsanforderungen oder die für den Verfahrensschritt benötigte Zeit den Anforderungen genügen. Ferner fließen betriebswirtschaftliche Überlegungen ein, insbesondere die voraussichtlichen Kosten. Die infrage kommenden Maschinen sind oft an verschiedenen Standorten installiert und können auch verschiedenen Eigentümern gehören, beispielsweise Zulieferern.

Eine derartige Produktionsplanung ist mit viel Aufwand und gewissen Unsicherheiten verbunden. Es ist oft schwierig und zeitaufwändig, die Anforderungen an die technischen Eigenschaften der Maschine aus dem Produkt-Design abzuleiten und mit den vorhandenen Eigenschaften der eigenen und fremden Maschinen zu matchen, d.h. abzugleichen. Meist werden durch einen Produktionsleiter die verschiedenen Fertigungsmöglichkeiten an jedem Standort bzw. für jede Maschine abgefragt werden, einschließlich einer großen Anzahl von Detailinformationen zu den technischen Eigenschaften der Maschinen. Wenn festgestellt wird, dass keine internen Produktionsfähigkeiten vorhanden sind, wird extern nach einem passenden Lieferanten gesucht. Fertigungsleiter an den verschiedenen Standorten haben in der Regel nur das Wissen über die am jeweiligen Standort befindliche Maschinen, wodurch eine standortübergreifende Planung erschwert wird.

Der Erfindung liegt die Aufgabe zugrunde, ein verbessertes Verfahren zur Produktionsplanung anzugeben.

Diese Aufgabe wird durch ein Verfahren mit den Merkmalen des Anspruchs 1 gelöst. Ferner sind Gegenstand der Erfindung eine entsprechende Vorrichtung oder ein System zur Datenverarbeitung, ein entsprechendes Computerprogramm, ein entsprechender computerlesbarer Datenträger, und ein entsprechendes Datenträgersignal. Vorteilhafte Ausgestaltungen der Erfindung sind in den Unteransprüchen angegeben.

Die Erfindung sieht eine Plattform vor, der mehrere Maschinen in der Weise zugeordnet sind, dass Maschinendaten der Maschinen in der Plattform gespeichert sind. Mit dem Begriff Plattform ist eine Infrastruktur bezeichnet, die Zugriff auf die zugeordneten Maschinen hat und eine zumindest unidirektionale Kommunikation ermöglicht. Die Maschinendaten geben Maschinenfähigkeiten wieder, insbesondere mindestens einen durchführbaren Fertigungsschritt und mindestens eine technische Eigenschaft der jeweiligen Maschine. Die Plattform verwendet ein einheitliches Datenformat, im Folgenden als Neutralformat bezeichnet, auf das das mindestens eine proprietäre Format der Maschinendaten gemappt, d.h. übersetzt wird, wenn die Maschinendaten nicht bereits im selben Format vorliegen.

Für das herzustellende Objekt liegen Objektdaten vor, die Eigenschaften eines zu produzierenden Objekts angeben. Die Plattform empfängt die Objektdaten, wobei ebenfalls ein Mapping auf das Neutralformat erfolgt, wenn die Objektdaten nicht bereits im Neutralformat vorliegen. Die Objektdaten können auch durch ein Feature-Erkennungsverfahren aus Daten des zu produzierenden Objekts ermittelt werden.

Die Plattform ermittelt anhand der Objektdaten ein oder mehrere abgeleitete Objektdaten; diese können teilweise mit den Objektdaten übereinstimmen. Die abgeleiteten Objektdaten geben die zu den Objektdaten korrelierenden Maschinenanforderungen an, also Eigenschaften oder Parameterwerte, die bei der Produktion des Objekts durch eine Maschine zu erfüllen sind. Mit anderen Worten, diese Maschinenfähigkeiten, insbesondere Maschinen-Bearbeitungsfähigkeiten sind erforderlich, um das Objekt mit den geforderten Eigenschaften produzieren zu können. Als abgeleitetes Objektdatum wird mindestens ein Fertigungsverfahren ermittelt, das für die Produktion des Objekts geeignet ist. Weitere abgeleitete Objektdaten können gleichzeitig oder zu einem späteren Zeitpunkt ermittelt werden.

Die Plattform ermittelt anhand der einen oder mehreren abgeleiteten Objektdaten und der Maschinendaten, welche Maschine oder welche Maschinen für die Produktion des Objekts verwendbar sind und gibt das Ergebnis als ein entsprechendes Signal aus.

Die Plattform ist vorzugsweise eine IOT-Plattform. Eine im industriellen Umfeld eigesetzte IOT-Plattform wird häufig auch als Industrial IOT-Plattform (IIOT-Plattform) bezeichnet.

Gemäß einer Ausführungsform liegen die Objektdaten in Form von Parametern mit jeweils mindestens einem zugeordneten Parameterwert vor. Die Objektdaten können beispielsweise die Geometrie, die Größe, das Material, Toleranzen, Oberflächengüte, Härteangaben, Qualitätsanforderungen oder ähnliches beschreiben. Die abgeleiteten Objektdaten können aus jeweils einem Parameter der Objektdaten ermittelt werden, oder es können mehrere Objektdaten-Parameter für die Ermittlung eines abgeleiteten Objektdatums verwendet werden. Beispielsweise kann ein Fertigungsverfahren (wie Drehen, Fräsen, Schleifen, Verzahnen, ...) aus Geometrie des Objekts (beispielsweise Zylinder, Passfedernut, ...), Materialangaben (Aluminium, Kunststoff, ...), Toleranzangaben (beispielsweise ISO-Toleranzgrad, ...) und Oberflächenangaben (beispielsweise Oberflächengüte, ...) ermittelt werden. Es können zusätzlich objektunabhängige Daten, die in der IOT-Plattform hinterlegt sind, für die Ermittlung der abgeleiteten Objektdaten verwendet werden. Beispielsweise kann aus Standardwerten für Fräsgeschwindigkeiten aus dem Vollen bzw. aus einem Rohteil die voraussichtliche Arbeitsdauer ermittelt werden.

Es werden vorzugsweise zunächst ein oder mehrere geeignete Fertigungsverfahren als abgeleitetes Objektdatum ermittelt. In vielen Fällen wird das Fertigungsverfahren aus einer Vielzahl von Objektdaten abgeleitet. Je nachdem, welches Fertigungsverfahren geeignet ist, können danach die für dieses Fertigungsverfahren relevanten abgeleiteten Objektdaten bestimmt werden, während irrelevante abgeleitete Objektdaten nicht notwendig sind.

Gemäß einer Ausführungsform liegen die Maschinendaten für eine Maschine in Form von Parametern mit jeweils mindestens einem zugeordneten Parameterwert vor. Beispielsweise können bei einer Maschine für den Parameter "Fertigungsverfahren" die Werte Fräsen, Drehen, Gewindeschneiden, Aufbohren zugeordnet sein. Maschinendaten können auch einer Gruppe von Maschinen zugeordnet sein, beispielsweise kann einer Montagelinie als durchführbarer Fertigungsschritt "Montage von Komponenten auf einer Leiterplatte" zugeordnet sein. Weitere Parameter können sein: Werkstoff, Geometrie (Größe des Arbeitsraums, Anzahl und Art der Verfahrachsen), Drehzahl, Vorschubkraft, Toleranzen (IT-Grad), Oberflächengüte, Härteangaben u.a. Die Maschinendaten beschreiben demnach die Maschinen-Bearbeitungsfähigkeiten. Für die Maschinendaten wird vorzugsweise die DIN 4000-210 herangezogen, in dieser Norm sind die für die Beschreibung von Maschinenbearbeitungsfähigkeiten relevanten Parameter festgelegt. Die folgende Tabelle zeigt ein Beispiel für Maschinenparameter einer mit A bezeichneten Maschine, wobei DIN 4000-210 genaue Definitionen dieser Parameter enthält:

| Maschinenparamater nach DIN4000-210 | Parameterbeschreibung | Wert (Beispiel) | Einheit |
|---|---|---|---|
| BLD | Bildkennung | 104 | |
| A51 | Länge Arbeitsraum | 700 | mm |
| A52 | Breite Arbeitsraum | 500 | mm |
| A53 | Höhe Arbeitsraum | 400 | mm |
| A54 | Durchmesser Arbeitsraum | 300 | mm |
| A001 | Anzahl Maschinenachsen, translatorisch | 2 | - |
| A002 | Anzahl Maschinenachsen, rotatorisch | 1 | - |
| A003 | Anzahl Wechslerachsen, translatorisch | 0 | - |
| A004 | Anzahl Wechslerachsen, rotatorisch | 0 | - |
| B11 | Achsbezeichnung, Norm | X | - |
| B15 | Drehzahl max., Bearbeitungsbetrieb | 2000 | 1/min |
| B51 | Vorschubkraft bei 100% ED | 150 | N |
| B52 | Vorschubkraft bei 40% ED | 6000 | N |
| B45 | Vorschubmoment | 2500 | Nm |
| B37 | Geschwindigkeit, max. | 2 | m/min |
| B333 | Qualitätsgüte | 5 | - |

Die in der Plattform vorliegenden Maschinendaten können aus Maschinendaten von an die Plattform angeschlossenen Herstellern/Maschinen entnommen werden, die zunächst in einem proprietären Datenformat vorliegen und in der Plattform auf das Neutralformat gemappt werden. Der Begriff "in der Plattform gespeichert" umfasst auch, dass die Maschinendaten in einer Datendank gespeichert sind, auf die die Plattform Zugriff hat. Dabei kann mit einem Sicherheitsverfahren, beispielsweise einer 2-Faktor-Identifizierung, sichergestellt werden, dass nur Daten auf die Plattform gestellt werden, wenn die Produktionsstätte dies ausdrücklich zulässt. Entsprechendes gilt für die Objektdaten.

Die Objektdaten werden vorzugsweise einem 3D-Objekt entnommenen, das von einem Auftraggeber in die IOT-Plattform gestellt ist. Das 3D-Objekt ist dabei mit einem entsprechenden SW-Tool erstellt, das auch die Objektdaten zur Verfügung stellt. Diese Objektdaten liegen vorzugsweise zunächst im Format des SW-Tools vor und werden durch die IOT-Plattform in das Neutralformat übersetzt. Das SW-Tool kann dabei Teil eines PDM-Tools (Product Data Management) des Auftraggebers sein. Durch das in der IOT-Plattform erfolgende Mapping bleibt das Datenmodell des Auftraggebers unverändert und Software-Anpassungen sind nicht nötig.

Die Objektdaten können auch Daten umfassen, die sich nicht direkt auf die technische Fertigung des Objekts beziehen, sondern auf zeitliche oder kostenmäßige Randbedingungen, beispielsweise Anzahl der herzustellenden Objekte, Lieferzeit, Kostengrenze. Entsprechendes gilt für die abgeleiteten Objektdaten. Insbesondere derartige Objektdaten können auch erst im weiteren Ablauf des Verfahrens von der IOT-Plattform empfangen werden; beispielsweise kann die Anzahl herzustellender Objekte erst eingegeben oder abgefragt werden, wenn die technische Machbarkeit mit den der IOT-Plattform zugeordneten Maschinen feststeht.

Die abgeleiteten Objektdaten können mithilfe eines oder mehrerer Entscheidungsbäume bestimmt werden, wobei je nach Wert eines Parameters unterschiedliche Verzweigungen verfolgt werden.

Die Ausgabe eines Signals, das die einsetzbaren Maschinen angibt, erfolgt beispielsweise auf einem Display eines Terminals, das mit der IOT-Plattform verbunden ist. Das Signal kann auch für eine Steuerung verwendet werden, beispielsweise können Maschinenkapazitäten für die Produktion des Objekts reserviert werden.

Wenn die Anwendung des Verfahrens ergibt, dass mehrere Maschinen alternativ für einen Verfahrensschritt einsetzbar sind, mit anderen Worten, dass die Maschinendaten unterschiedlicher Maschinen mit den abgeleiteten Objektdaten gematcht werden können, kann eine Auswahl durch ein Optimierungsverfahren erfolgen. Die Optimierung kann dabei anhand der erreichbaren Qualität, der benötigten Zeit oder verfügbaren Kapazität, der Kosten oder anderer Kriterien erfolgen.

Beispielsweise kann als Objektdatum der Parameter Geometrieform (d.h. rotationssymmetrisch und/oder kubisch) vorgegeben sein. Je nach Parameterwert kann dann zwischen den Fertigungsverfahren Bohren, Fräsen, Drehen und Schleifen entschieden werden; es werden also unterschiedliche Verzweigungen verfolgt. Diese unterschiedlichen Fertigungsverfahren können wiederum mit jeweiligen erzielbaren Oberflächengüten, Maß -, Form - und Lagetoleranzen verknüpft sein. Es ergeben sich also je nach geforderter Oberflächengüte ein oder mehrere mögliche Fertigungsverfahren, und im letzteren Fall kann eine Optimierung hinsichtlich der Oberflächengüte erfolgen, also eine Priorisierung der in Frage kommenden Fertigungsverfahren.

Es liegt im Rahmen der Erfindung, dass das herzustellende Objekt aus mehreren Komponenten besteht, für die vorzugsweise das erfindungsgemäße Verfahren jeweils einzeln durchgeführt wird, sowie vorzugsweise für den anschließenden Zusammenbau der Komponenten.

Die Erfindung wird im Folgenden anhand von Ausführungsbeispielen näher erläutert. Es zeigen in schematischer Darstellung:
- Fig.1: eine IOT-Plattform mit zugeordneten Produktionsstätten und Maschinen
- Fig.2: ein Mapping zwischen Datenformaten
- Fig.3: ein 3D-Objekt
- Fig.4: ein Ausführungsbeispiel des Verfahrens anhand eines Ablaufdiagramms
- Fig.5: eine Darstellung der Objektdaten, abgeleiteten Objektdaten und Maschinendaten

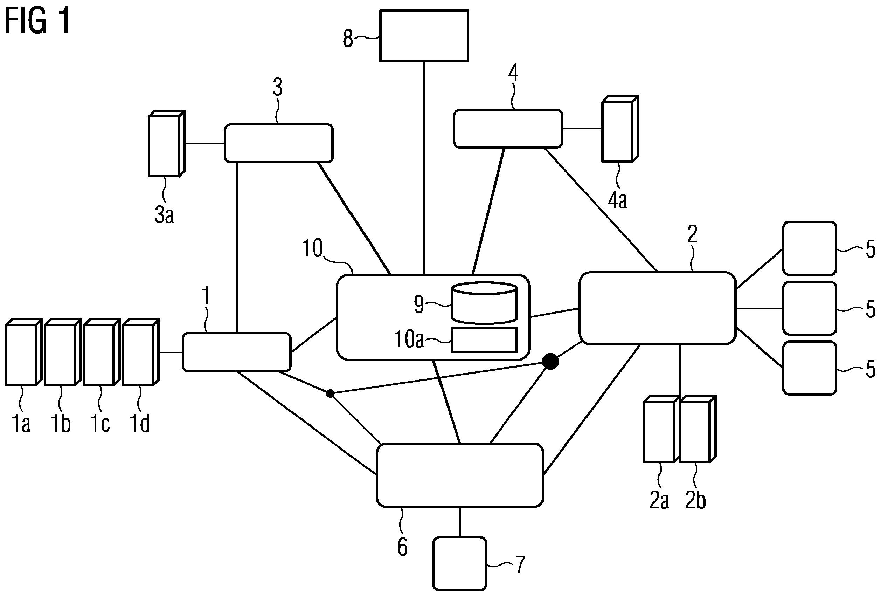

Fig.1 zeigt eine IOT-Plattform 10, der Produktionsstätten 1, 2, 3, 4 zugeordnet sind. Dabei sind die Produktionsstätten 3, 4, bei jeweils einem Zulieferer vorhanden, während die Produktionsstätten 1, 2 dem Auftragnehmer gehören. Jede Produktionsstätte umfasst eine oder mehrerer Maschinen 1a, 1b, 1c, 1d, 2a, 2b, 3a, 4a. Mit 6 ist der Auftraggeber bezeichnet. Dargestellt sind ferner exemplarisch für die Produktionsstätte 2 dort eingesetzte SW-Tools 5, beispielsweise ein ERP-Tool (Enterprise Resource Planning), ein PDM-Tool (Product Data Management) und ein FDM-Tool (Factory Data Management), für die bekannte SW-Lösungen verwendet werden können. Mit 7 sind SW-Tools des Auftraggebers bezeichnet, beispielsweise ein CAD-Tool für das Produktdesign eines herzustellenden Objekts. In der Figur ferner dargestellt sind optionale Verbindungen einiger Produktionsstätten untereinander, über die Daten ausgetauscht werden können.

Die IOT-Plattform 10 ist mit einem Terminal 8 verbunden, an dem ein Signal ausgegeben werden kann. Ferner sind dargestellt eine Datenbank 9 und eine Recheneinheit 10a als Bestandteile der IOT-Plattform.

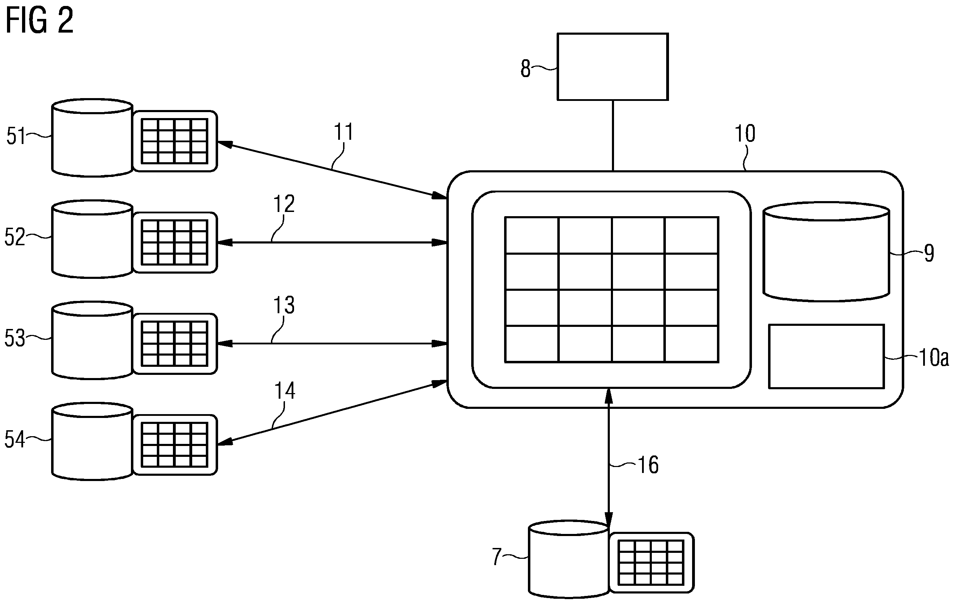

Fig.2 zeigt schematisch das Mapping verschiedener Datenformate auf das Datenformat der IOT-Plattform, d.h. auf das Neutralformat. Die SW-Tools 51, 52, 53, 54 der Produktionsstätten 1 - 4 weisen jeweils ein proprietäres Datenformat auf. Die SW-Tools dienen unter anderem der Verwaltung von Maschinendaten, die Eigenschaften der Maschinen der jeweiligen Produktionsstätten beschreiben. Jedes dieser voneinander verschiedenen Datenformate wird unter Nutzung der Recheneinheit 10a mit einem passenden Mapping 11, 12, 13, 14 in das Neutralformat der IOT-Plattform 10 übersetzt, das vom SW-System der IOT-Plattform verwendet wird. Durch das Mapping liegen die Maschinendaten im Neutralformat vor, vorzugsweise in der Datenbank 9, die der Plattform zugeordnet ist.

In entsprechender Weise wird das proprietäre Datenformat des SW-Tools 7 des Auftraggebers mit einem passenden Mapping 16 in das Neutralformat der IOT-Plattform 10 übersetzt.

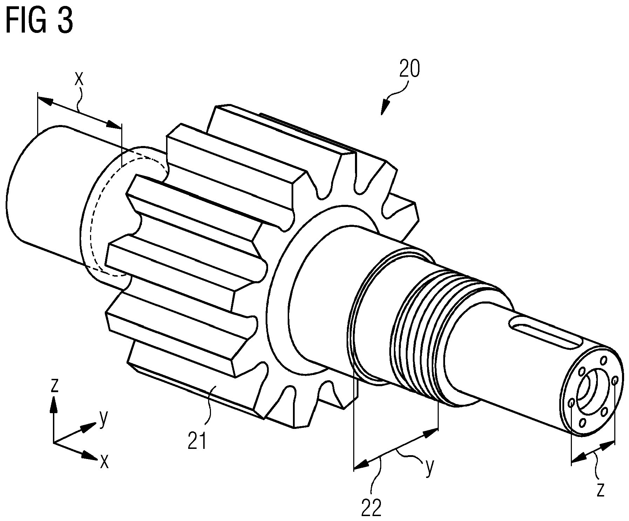

Fig.3 zeigt ein Beispiel für ein mit dem CAD-Tool 7 entworfenes 3D-Objekt 20 des herzustellenden Objekts. Das 3D-Objekt umfasst neben einer grafischen Darstellung 21 mehrere Objektdaten 22, die das Objekt beschreiben. Das CAD-Tool zeigt einige der Objektdaten 22 teilweise zusammen der grafischen Darstellung 21 auf einem Bildschirm an, in der Figur sind vereinfacht und als Beispiel die Maßangaben x, y, z dargestellt. Die Objektdaten liegen außerdem in einer passenden Datenstruktur vor, beispielsweise in Form einer Tabelle, die Parameter mit zugeordneten Werten auflistet.

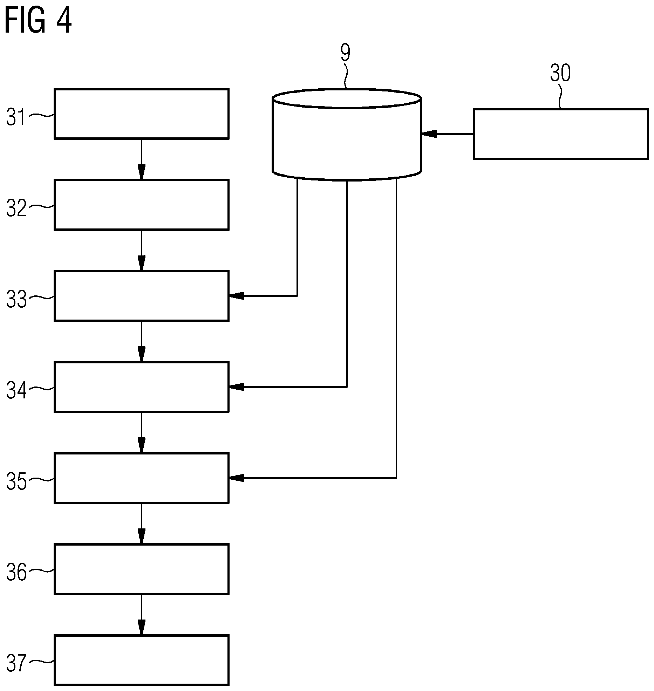

Fig.4 zeigt einen Ablauf des Verfahrens. In Schritt 30 werden die Maschinendaten von der Datenbank 9 der IOT-Plattform erfasst, beispielsweise durch Übermittlung von Daten aus den SW-Tools der jeweiligen Produktionsstätten. Diese werden dann mithilfe der Recheneinheit 10a der IOT-Plattform in das Neutralformat übersetzt und in der Datenbank 9 gespeichert.

In Schritt 31 stellt der Auftraggeber das 3D-Objekt des herzustellenden Objekts in die IOT-Plattform. Das Datenformat des 3D-Objekts ist durch die vom Auftraggeber verwendete Software für das Produktdesign bestimmt, und stimmt in der Regel nicht mit dem von der IOT-Plattform verwendeten Datenformat überein. Daher umfasst Schritt 31 auch ein Mapping des ursprünglichen Datenformats auf das Datenformat der IOT-Plattform. In diesem Schritt werden demnach zum 3D-Objekt zugehörige Objektdaten für die IOT-Plattform im Neutralformat bereitgestellt. Dabei erfolgt vorzugsweise zunächst die Übersetzung in das Neutralformat und dann eine Analyse in Form einer Feature-Erkennung in der IOT-Plattform, und als Ergebnis dieser Analyse werden Objektdaten als Parameter ausgegeben. Unter Feature-Erkennung versteht man ein Verfahren, mit dem aus dem 3D-Objekt sogenannte Geometrieelemente (Bohrung, Nut, Zylinder, etc.) und Informationselemente (Oberflächengüte, Toleranzen, etc.) ermittelt werden. Die Objektdaten beschreiben die für die Herstellung des Objekts notwendigen Parameter, wie beispielsweise Material, Größe, Form, Oberflächenbeschaffenheit, Toleranzanforderung.

In Schritt 32 ermittelt die Recheneinheit 10a der IOT-Plattform aus den Objektdaten ein oder mehrere abgeleitete Objektdaten, und zwar mindestens ein geeignetes Fertigungsverfahren. Die abgeleiteten Objektdaten beschreiben die Anforderung oder Anforderungen an die Maschine oder Maschinen, die für die Herstellung oder Fertigung des Objekts verwendet werden, sie stellen quasi eine Übersetzung der Objektdaten in Maschinen-Bearbeitungsfähigkeiten dar. Beispielsweise ergeben sich aus den Objektdaten Form, Material und weiteren das oder die Fertigungsverfahren, die für die Herstellung oder Fertigung eingesetzt werden können oder müssen. Abhängig vom geeigneten Fertigungsverfahren werden weitere dafür relevante abgeleitete Objektdaten bestimmt. Beispielsweise wird anhand bestimmter, für das Fertigungsverfahren relevanter geometrischer Angaben zum herzustellenden Objekt die Mindestgröße des Arbeitsraums einer geeigneten Maschine bestimmt.

In Schritt 33 werden die abgeleiteten Objektdaten mit den Maschinendaten der in den Produktionsstätten verfügbare Maschinen, die in der IOT-Plattform gespeichert sind, verglichen. Es werden also die Anforderungen mit den zugreifbaren Ressourcen gematcht. Aus dem Vergleich ergibt sich, ob eine oder mehrere der Maschinen für die Herstellung des Objekts geeignet ist und ggf. welche. Ferner werden auch Maschinen an anderen Produktionsstätten, ggf. Maschinen von Zulieferern, in den Vergleich einbezogen. Die Maschinendaten liegen dabei entsprechend der Norm DIN4000-210 vor.

In Schritt 34 kann die Analyse über die technische Machbarkeit hinaus vertieft werden. Dazu werden weitere Daten berücksichtigt, die Teil der Objektdaten, der abgeleiteten Objektdaten, der Maschinendaten oder anderer in der Datenbank gespeicherter Daten sind. Beispielsweise können in der Datenbank Fertigungszeiten oder -geschwindigkeiten für bestimmte Fertigungsschritte - ggf. als maschinenspezifische Maschinendaten - hinterlegt sein, so dass die Fertigungszeit für das herzustellende Objekt bestimmt werden kann. Es können die Kosten anhand von Maschinenstundensätzen berechnet werden. Vorzugsweise werden Maschinenbelegungspläne berücksichtigt, um zu bestimmen, ob und ggf. wann ausreichende Kapazitäten vorhanden sind. Es können weitere Objektdaten oder andere vom Auftraggeber vorgegebene Daten berücksichtigt werden, beispielsweise eine Stückzahl oder ein vorgegebenes Lieferdatum. Diese Daten können aus dem ERP-System des Auftraggebers in das Datenformat der IOT-Plattform übersetzt werden.

Falls für die Herstellung des Objekts mehrere Maschinen alternativ in Frage kommen, kann in Schritt 35 eine Optimierung stattfinden. Es kann beispielsweise unter Qualitäts-, Zeit-und/oder Kostengesichtspunkten die Auswahl der einzusetzenden Maschine oder Maschinen optimiert werden.

In Schritt 36 wird das Ergebnis der Produktionsplanung in geeigneter Weise über das Terminal ausgegeben und, ggf. in stark gekürzter Form, an den Auftraggeber übermittelt, so dass nach Auftragserteilung die Herstellung des Objekts entsprechend der Planung erfolgen kann. Es liegt im Rahmen der Erfindung, dass auch danach noch Änderungen oder Optimierungen der Planung erfolgen können, beispielsweise weil sich Maschinenkapazitäten, Stückzahlen oder Lieferfristen noch ändern.

In Schritt 37 erfolgt die Herstellung des Objekts entsprechend der finalen Produktionsplanung.

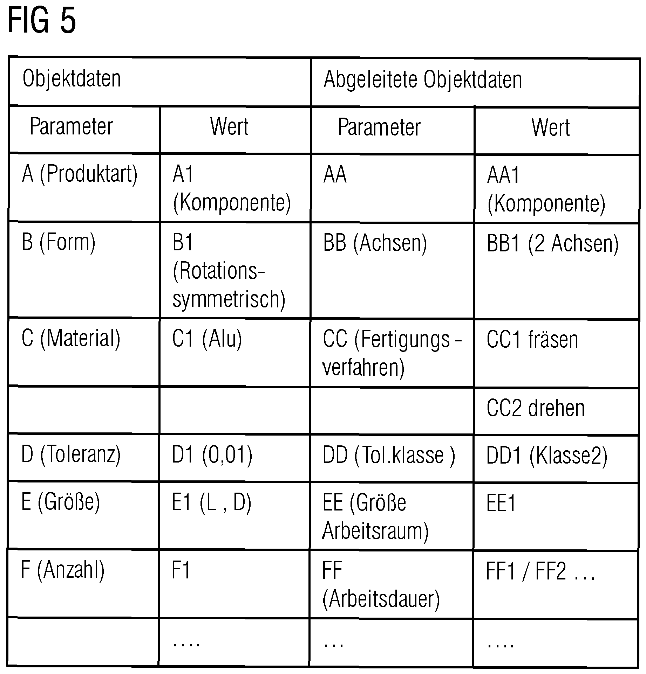

Fig. 5 zeigt ein vereinfachtes Beispiel für die bei dem Verfahren verwendeten Objektdaten und abgeleiteten Objektdaten, die in der IOT-Plattform vorliegen. Als Objektdaten liegen die Parameter A, B, C, D, E, F vor, ihr jeweiliger Wert ist A1, B1, C1, D1, E1 und F1. Im gezeigten Beispiel gibt A die Produktart an, mit Wert A1 = Komponente. B gibt die Form an, der Wert B1 bedeutet rotationssymmetrisch. C gibt das Material an, der Wert C1 bedeutet Aluminium. D gibt die Toleranz an, der Wert D1 bedeutet 1%. E gibt die Größe an, der Wert E1 gibt Werte zu Länge und Durchmesser an. F gibt die vom Auftraggeber gewünschte Stückzahl mit Wert F1 an.

Aus den Objektdaten ergeben sich als abgeleitete Objektdaten u.a. die Parameter AA, BB, CC, DD, EE, FF. AA beschreibt wie A die Produktart Komponente (Wert AA1). Aus dem Parameter B (Form) wird der Parameter BB abgeleitet, der die benötigten Fertigungsachsen angibt. In diesem Fall beträgt der Wert BB1, der "2 Achsen" bedeutet. Der Parameter CC gibt die anwendbaren Fertigungen an und wird aus der Kombination mehrerer Objektdaten, beispielsweise B (Form) und C (Material) abgeleitet; es ergeben sich die Parameterwerte CC1 (fräsen) und CC2 (drehen).

In ähnlicher Weise wird aus der Toleranz eine Toleranzklasse DD mit Wert DD1 abgeleitet, und aus der Größe der Komponente der benötigte Arbeitsraum. Die Arbeitsdauer (Fertigungszeit) FF kann aus der Größe, der Anzahl, hinterlegten Arbeitsgeschwindigkeiten und dem notwendigen Materialabtrag für Fräs- bzw. Drehprozesse ermittelt werden (FF1, FF2, ..).

Vorzugsweise wird in einem ersten Schritt das oder die geeigneten Fertigungsverfahren (Parameter CC) aus den Objektdaten abgeleitet und in einem zweiten Schritt dir für das oder die geeigneten Fertigungsverfahren relevanten weiteren abgeleiteten Objektdaten.

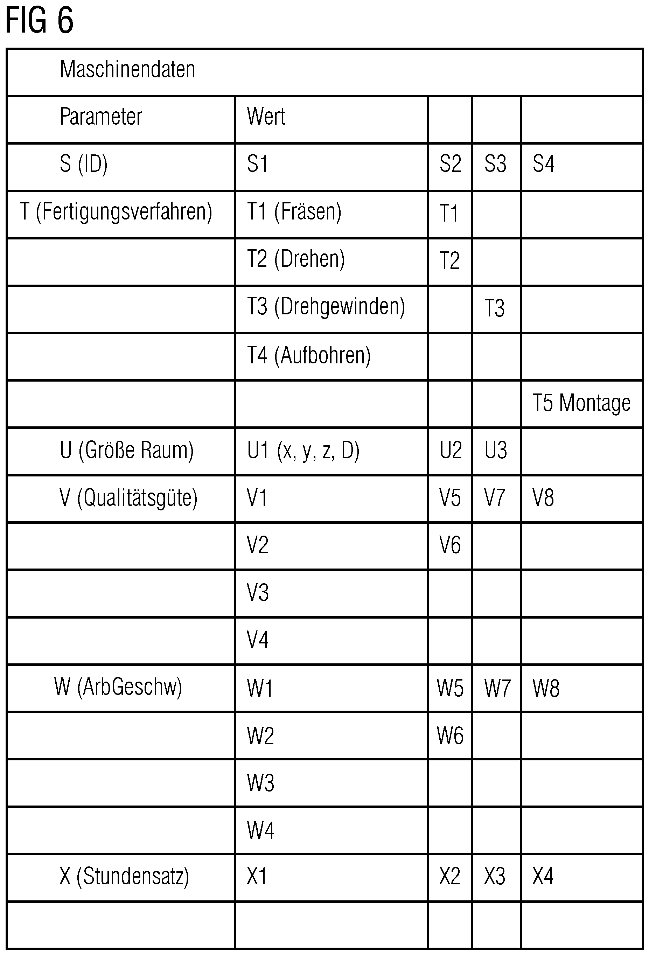

Fig.6 zeigt ein vereinfachtes Beispiel für die bei dem Verfahren verwendeten Maschinendaten, die in der IOT-Plattform vorliegen. Als Maschinendaten liegen folgende Parameter vor: eine Maschinenidentifikation S, die jeweils möglichen Fertigungsverfahren T, Größe des Arbeitsraums U, Qualitätsgüte V, Arbeitsgeschwindigkeit W und Maschinenstundensatz X. An der Figur ist erkennbar, dass die Maschine S1 vier Fertigungsmöglichkeiten bietet, nämlich fräsen, drehen, drehgewinden und aufbohren, eine Arbeitsraumgröße mit Wert U1 aufweist. Den unterschiedlichen Fertigungsmöglichkeiten sind jeweils die Qualitätsgüte V1, V2, V3 bzw. V4 zugeordnet sowie die Arbeitsgeschwindigkeiten W1, W2, W3 bzw. W4. Der Maschinenstundensatz für die Maschine S1 beträgt einheitlich X1. Für die Maschinen S2, S3 und S4 sind entsprechende Eigenschaften, d.h. Maschinendaten, aus der Figur entnehmbar. Beispielsweise ist S4 eine Montagelinie und nicht für die Herstellung einer Komponente geeignet. Der Parameter Arbeitsgeschwindigkeit (W) wird für die Berechnung der Arbeitsdauern (FF) als abgeleitete Objektdaten verwendet.

Der von der Recheneinheit der IOT-Plattform durchgeführte Vergleich (Schritt 33) zieht die abgeleiteten Objektdaten und die Maschinendaten heran, um die geeigneten Maschinen zu ermitteln. In diesem Beispiel wird angenommen, dass die Maschinen S1 im Gegensatz zur Maschine S2 einen ausreichend großen Arbeitsraum und eine ausreichende Qualitätsgüte besitzt, so dass der Vergleich nur die Maschine S1 als Ergebnis liefert, das ausgegeben und am Display des Terminals entsprechend angezeigt wird.

Das erfindungsgemäße Verfahren ermöglicht eine einfache Bestimmung, ob und ggf. welche Maschinen für die Fertigung eines Objekts geeignet sind. Die Daten des zu produzierenden Objekts und vorhandenen Fertigungsmöglichkeiten werden dafür über eine IOT-Plattform mit einem einheitlichen Datenformat ausgetauscht und abgeglichen. Die an den Produktionsstätten oder beim Auftraggeber vorhandene Software kann beibehalten werden.

### Bezugszeichen

- 10: IOT-Plattform
- 1 - 4: Produktionsstätten
- 1a - 1d, 2a-2b, 3a, 4a: Maschinen
- 5: SW-Tools einer Produktionsstätte/Auftragnehmer
- 6: Auftraggeber
- 7: SW-Tool des Auftraggebers
- 8: Terminal
- 9: Datenbank
- 10a: Recheneinheit
- 51 - 54: SW-Tools
- 11-14: Mappings
- 16: Mapping
- 20: 3D-Objekt
- 21: grafische Darstellung des 3D-Objekts
- 22: Objektdaten

## Patentansprüche

1. Verfahren zur Produktionsplanung, bei dem
- In einer Plattform (10) Maschinendaten von der Plattform zugeordneten Maschinen (1a, 1b, 1c, 1d, 2a, 2b, 3a, 4a) gespeichert sind, die Maschinenfähigkeiten der jeweiligen Maschine angeben,
- In der Plattform Objektdaten bereitgestellt werden, die Eigenschaften eines zu produzierenden Objekts angeben,
- Die Plattform anhand der Objektdaten ein oder mehrere abgeleitete Objektdaten für die Produktion des Objekts, ermittelt, wobei die abgeleiteten Objektdaten zumindest ein geeignetes Fertigungsverfahren umfassen,
- Die Plattform anhand des einen oder der mehreren abgeleiteten Objektdaten und der Maschinendaten ermittelt, welche Maschine oder welche Maschinen für die Produktion des Objekts verwendbar ist,
- Die Plattform ein Signal ausgibt, das eine geeignete Maschine angibt.

2. Verfahren nach dem vorstehenden Anspruch, **dadurch gekennzeichnet, dass** als Plattform (10) eine IOT-Plattform verwendet wird.

3. Verfahren nach einem der vorstehenden Ansprüche, **dadurch gekennzeichnet, dass** die Maschinendaten Fertigungsverfahren, Werkstoff, Geometrieangaben, Drehzahl, Vorschubkraft, Toleranzangaben, Qualitätsgüten, Oberflächengüte und/oder Härteangaben umfassen.

4. Verfahren nach einem der vorstehenden Ansprüche, **dadurch gekennzeichnet, dass** die Maschinendaten mithilfe eines Mappings (11, 12, 13, 14) in ein Datenformat der Plattform übersetzt werden.

5. Verfahren nach einem der vorstehenden Ansprüche, **dadurch gekennzeichnet, dass** die Objektdaten einem 3D-Objekt des zu produzierenden Objekts direkt oder mithilfe eines Feature-Erkennungsverfahrens entnommen werden und mithilfe eines Mappings (16) in ein Datenformat der Plattform (10) übersetzt werden.

6. Verfahren nach einem der vorstehenden Ansprüche, **dadurch gekennzeichnet, dass** die Objektdaten Geometrie, Größe, Material, Toleranzen, Oberflächengüte, Härteangaben und/oder Qualitätsanforderungen beschreiben.

7. Verfahren nach einem der vorstehenden Ansprüche, **dadurch gekennzeichnet, dass** mehrere Objektdaten für die Ermittlung eines abgeleiteten Objektdatums verwendet werden.

8. Verfahren nach einem der vorstehenden Ansprüche, **dadurch gekennzeichnet, dass** die abgeleiteten Objektdaten mithilfe mindestens eines Entscheidungsbaum ermittelt wird.

9. Verfahren nach einem der vorstehenden Ansprüche, **dadurch gekennzeichnet, dass** die Auswahl der Maschine unter Berücksichtigung der Fertigungszeit und/oder der Kosten optimiert wird.

10. Vorrichtung oder System zur Datenverarbeitung, umfassend Mittel zur Ausführung des Verfahrens nach einem der Ansprüche 1 bis 8.

11. Computerprogramm, umfassend Befehle, die bei der Ausführung des Programms durch einen Computer diesen veranlassen, ein Verfahren nach einem der vorhergehenden Ansprüche auszuführen.

12. Computerlesbarer Datenträger, auf dem das Computerprogramm nach Anspruch 10 gespeichert ist.
